# EUROPÄISCHE PATENTSCHRIFT

(11) **EP 3 936 466 B1**
(45) Veröffentlichungstag und Bekanntmachung des Hinweises auf die Patenterteilung: **02.11.2022**
(21) Anmeldenummer: 21192111.9
(22) Anmeldetag: 12.01.2021
(51) Int. Cl.: B65G 49/04, B62D 65/18, B65G 19/02, B65G 47/64

(54) **MODULARES FÖRDERSYSTEM MIT EINEM SYSTEM ZUM EINFÄDELN UND AUSFÄDELN VON FAHRWAGEN**
MODULAR CONVEYOR SYSTEM WITH A SYSTEM FOR ATTACHING AND DETACHING CARRIAGES
SYSTÈME MODULAIRE DE TRANSPORT DOTÉ D'UN SYSTÈME D'INSERTION ET DE RETRAIT DE CHARIOTS

(30) Priorität: 07.02.2020 DE 102020103209
(43) Veröffentlichungstag der Anmeldung: 12.01.2022
(62) Teilanmeldung aus: 21151193.6
(73) Patentinhaber: Hayden AG, 6300 Zug (CH)
(72) Erfinder: Neofytidis, Georgios, 75391 Gechingen (DE)
(74) Vertreter: Christ, Niko

(56) Entgegenhaltungen:
- WO-A1-2005/115886
- WO-A1-2012/152385
- WO-A1-2019/000005
- WO-A1-2019/025941
- JP-A- 2012 017 177

## Beschreibung

Die vorliegende Erfindung betrifft ein modulares Fördersystem mit einer Mehrzahl schienengeführter Fahrwagen, welche jeweils einen Schlitten zur Führung durch eine Schienenkiste des Fördersystems, sowie einen horizontalen Auslieger zum Tragen einer Last, insbesondere einer Fahrzeugkarosserie, aufweisen, wobei der Auslieger um eine horizontale Ausliegerachse drehbar gelagert ist und zur Übertragung einer Drehbewegung auf die Ausliegerachse ein mit dieser drehfest verbundenes erstes Zahnelement aufweist, welches entweder mit entlang einem Fahrweg des Schlittens ortsfest montierten zweiten Zahnelementen, oder alternativ mit einem dritten Zahnelement kämmt, welches von einem auf dem Schlitten benachbart zu der Ausliegerachse montierten, mitgeführten Kippmotor betätigt wird, wobei das erste Zahnelement hierfür sowohl derart außerhalb des Schlittens positioniert ist, dass es mit den zweiten Zahnelementen entlang des Fahrwegs des Schlittens in Eingriff geraten, als auch derart benachbart zu einer Montageposition des Kippmotors auf dem Schlitten positioniert ist, dass es mit dem dritten Zahnelement zusammenwirken kann.

Ein derartiges Fördersystem ist bereits aus der WO 2019/025941 A1 , welches die Merkmale des Oberbegriffs des Anspruchs 1 offenbart, vorbekannt, ein weiteres Fördersystem aus der WO 03/070545 A1. Letzteres hebt den Unterschied zwischen kettengeführten, kontinuierlich fördernden Vorrichtungen wie in der DE 196 41 048 A1 und individueller Verfahrbarkeit der einzelnen Fahrwagen in sogenannten Taktanlagen hervor. Als Beispiele für Taktanlagen werden die DE 43 04 145 C1 und die DE 200 22 634 U1 genannt. Das Dokument arbeitet heraus, dass die kontinuierlich fördernden Vorrichtungen einen größeren Durchsatz besitzen und zuverlässiger sind, die Taktanlagen hingegen haben den Vorteil, im laufenden Prozess unterschiedliche Taktzeiten an den einzelnen Arbeitsschritten umzusetzen, da Werkstücke damit beispielsweise einen Arbeitsschritt schnell durchlaufen, an einem anderen hingegen bedarfsweise angehalten werden können. Die WO 03/070545 A1 sieht daher vor, Fahrwagen einzusetzen, die beide Systeme miteinander verbinden.

Ein ähnliches System mit einzeln geförderten Fahrwagen ist aus der WO 2019/000005 A1 vorbekannt. Dort ist ein selbstfahrender Fahrwagen vorgesehen, welcher einen Antrieb unterhalb seines Schlittens mitführt und seine Ausliegerachse über einen separaten, zweiten Antrieb bewegen kann. Hierbei erfolgt eine lediglich einseitige Lagerung des Fahrwagens auf einer Schienenkiste, wobei eine zusätzliche Abstützung durch einen nach oben weisenden, anklappbaren Stützarm erfolgen kann.

Die DE 2013 217 794 A1 verwirklicht ein weitergehend taktbasiertes Konzept, bei dem die einzelnen Fahrwagen weitgehend losgelöst von den Fahrzeugkarosserien geführt werden, indem die Fahrwagen die Fahrzeugkarosserien jeweils nur ein Stück des Weges begleiten und diese an bestimmten Positionen aufnehmen und ablegen können, so dass die Fahrwagen vorwärts und rückwärts verfahrbar sind.

Zur weiteren Dokumentation wird auf die Druckschriften US 2003/0097982 A1, JP 2010194447 A, US 2005/0139451 A1 und DE 10 2014 001 878 B3 verwiesen.

Neben der reinen Förderung der Fahrwagen durch den Prozess gibt es jedoch auch eine zweite wesentliche motorische Arbeit, die am Fahrwagen verrichtet werden muss. Hierbei handelt es sich um die Drehung der Last selbst, also der zur Tauchlackierung mitgeführten Fahrzeugkarosserie, um die Ausliegerachse herum. Die Drehung der Last wird in den genannten Schriften stets von einem mitgeführten Kippmotor durchgeführt, welcher insoweit ebenfalls eine Taktanlage umsetzt. Denkbar wäre aber auch hier ein zentralisierter Antrieb.

Vor diesem Hintergrund liegt der vorliegenden Erfindung die Aufgabe zu Grunde, ein modulares und hierdurch flexibles, sowie leicht erweiterbares und effizient herstellbares Fördersystem zu schaffen, welches sowohl im Hinblick auf den Kippantrieb als auch im Hinblick auf den Vortrieb als Taktanlage oder auch als kontinuierlich fördernde Anlage angepasst werden kann.

Dies gelingt durch ein Fördersystem gemäß den Merkmalen des unabhängigen Anspruchs 1. Weitere, sinnvolle Ausgestaltungen eines solchen Fördersystems können den sich jeweils anschließenden abhängigen Ansprüchen entnommen werden.

Erfindungsgemäß ist vorgesehen, dass entlang eines Fahrwegs, auf dem etwa eine Mehrzahl von Arbeitsstationen wie etwa Tauchbecken zum Lackieren oder Reinigen von Fahrzeugkarosserien angeordnet sind, eine Mehrzahl von Fahrwagen verfahren werden können. Die Fahrwagen sind als solche zunächst voneinander unabhängig und umfassen einen Schlitten und einen Auslieger, wobei der Auslieger die Last, also insbesondere eine Fahrzeugkarosserie, trägt und um eine Ausliegerachse herum derart drehbar ist, dass die Last bei der Drehung in ein dem Schlitten benachbartes Tauchbecken eintaucht. Die Drehung der Ausliegerachse und mithin das Kippen der Last wird mithilfe eines Zahnelements, vorzugsweise eines Zahnrads, einer Zahnscheibe oder einem Segment eines Zahnrads oder einer Zahnscheibe bewältigt, welches außerhalb des Schlittens angeordnet und drehfest mit der Ausliegerachse verbunden ist. Gleichzeitig befindet sich die Ausliegerachse auf dem Schlitten jedoch auch benachbart zu einer Montageposition eines Kippmotors, was es erlaubt, den Fahrwagen wahlweise mit oder ohne Kippmotor aufzubauen.

Hierdurch kann ein Eingriff wahlweise in ortsfeste zweite Zahnelemente erfolgen, bedarfsweise unter Zwischenschaltung eines Koppelgetriebes, wenn diese zweiten Zahnelemente entlang des Fahrweges angeordnet sind und das erste Zahnelement beim Vorbeiziehen des Fahrwagens in diese eingreifen kann.

Eine Alternative stellt die Verwendung eines mitgeführten Kippmotors dar, welcher seinerseits ein drittes Zahnelement, wiederum vorzugsweise unter Zwischenschaltung eines Getriebes, insbesondere eines Differenzial- oder Koppelgetriebes, antreibt, das in das erste Zahnelement eingreift.

Der beschriebene Aufbau des Fahrwagens erlaubt daher durch einfache Anpassungen die Verwirklichung eines zentralen oder eines dezentralen Kippantriebs.

In konkreter Ausgestaltung kann hierbei das erste Zahnelement als umlaufendes Zahnrad ausgeführt sein. Insbesondere kann das erste Zahnelement endständig an der Ausliegerachse positioniert sein und über die Schienenkiste hinausragen. Soweit das erste Zahnelement mit der Schienenkiste einen geringen Abstand einschließt, kann das Zahnelement dann in zweite Zahnelemente eingreifen, die entlang einer Außenwand der Schienenkiste angeordnet sind. Wird der Fahrwagen entlang der Schienenkiste bewegt, so gerät das erste Zahnelement dann in Eingriff mit den zweiten Zahnelementen, welche aufgrund des Vortriebs des Fahrwagens eine Relativbewegung zu dem ersten Zahnelement ausführen und hierdurch eine Kraft ausüben, welche die Ausliegerachse dreht.

Um ein Rückdrehen der Ausliegerachse zu verhindern, wenn die zweiten Zahnelemente überstrichen sind und die ersten Zahnelement außer Eingriff der ersten Zahnelemente geraten, kann mit einigem Vorteil eine lösbare Bremseinrichtung vorgesehen sein, welche die Ausliegerachse in einer gewünschten, vorbestimmten Drehposition hält. Mit Vorteil wird die Bremseinrichtung immer dann gelöst, wenn der gegenseitige Eingriff der ersten und zweiten Zahnelemente beginnt. Alternativ könnte auch der Schwerpunkt des Ausliegers so beeinflusst werden, dass die Ausliegerachse beim Verlassen des gegenseitigen Eingriffs der ersten und zweiten Zahnelemente sich stets in einer Gleichgewichtslage befindet.

Sieht das Fördersystem einen mitgeführten Kippmotor vor, so kann diesem ein Differenzialgetriebe zugeordnet sein, welches für eine positionsgenaue Ansteuerung einer Drehposition sorgt. Hierdurch können beliebige Drehpositionen angefahren und gehalten werden, ohne dass eine zusätzliche Bremse vorgesehen wird.

Aufgrund des großen Gewichts einer Last wie einer Fahrzeugkarosserie ist dem Auslieger an seiner von dem Schlitten abgewandten Seite ein Rad- oder Rollenelement zugeordnet mit dem sich der Fahrwagen auf einer zusätzlichen Stützschiene abstützt. Die zusätzliche Stützschiene erstreckt sich parallel zu der Schienenkiste den Fahrweg entlang, wobei insbesondere Schienenkiste und Stützschiene auf unterschiedlichen Seiten der Arbeitsstationen verlegt sein können, zu welchen die von dem Auslieger getragene Last gefördert wird.

Um ein Gleiten des Schlittens an oder vorzugsweise in einer Schienenkiste zu erleichtern, können diesem Rad- und Führungsrollen zugeordnet sein. Die Radrollen stützen hierbei den Schlitten auf einem horizontalen Abschnitt der Schienenkiste ab, während die Führungsrollen für einen gleichbleibenden Abstand zu vertikalen Abschnitten der Schienenkiste sicherstellen.

In einer bevorzugten Ausgestaltung handelt es sich bei dem Schlitten um eine quaderförmige Anordnung, welche in einem Aufnahmeraum einer C-förmigen, nach oben offenen Schienenkiste aufgenommen ist.

Weiter kann der Schienenkiste ein zusätzlicher Kettenführungsraum zugeordnet sein, in welchem eine Schleppkette aufgenommen ist. Eine solche Schleppkette kann insbesondere als umlaufende Schleppkette ausgestaltet sein, welche durch einen oberen Kettenführungsraum in eine Richtung läuft, durch einen unteren Kettenführungsraum in die entgegengesetzte Richtung wieder zurück. Die Fahrwagen weisen an ihren Schlitten Rastelemente auf, welche, vorzugsweise lösbar, mit der Schleppkette verbindbar sind.

Bei Verwendung einer Schleppkette ist der Fahrweg des Schlittens stets in gerade Fahrabschnitte unterteilt sein, da einer Kurvenfahrt mit einer Schleppkette nicht ohne Weiteres realisierbar ist. Jede einzelne Schleppkette ist ein autonomes System und wird separat mit einer endständigen Kettenspanneinrichtung gespannt.

Die Schleppketten als solche können mit einigem Vorteil auch ihrerseits Rad- und Führungsrollen aufweisen, so dass die Kettenglieder leicht gleiten und die Schleppkette möglichst spielfrei in dem Kettenführungsraum längsbeweglich geführt ist. Zudem umfassen die Ketten die Strukturelemente, also Kettenglieder und Zugelemente, an denen die Schlitten eingeklinkt werden können.

Die Verwendung einer Schleppkette in Kombination mit außenliegenden zweiten Zahnelementen erlaubt es, vollständig passive Fahrwagen einzusetzen, welche rein mechanisch funktionieren und daher sehr wartungsarm sind. Trotz der Verwendung einer Schleppkette kann jedoch auf einen Kippmotor zurückgegriffen werden.

Wird hingegen auf eine Schleppkette verzichtet, so muss ein alternativer Antrieb für den Vortrieb eingesetzt werden. Dennoch kann auch hier der Kippantrieb in beiden eingangs genannten Varianten, also mit einem Kippmotor oder über zweite Zahnelemente außerhalb des Schlittens realisiert werden. Als alternativer Vortrieb eignet sich mit besonderem Vorteil eine durchgehende Zahnschiene, welche entlang der Schienenkiste angeordnet ist, und in welche ein Übertragungsmittel eines auf dem Schlitten aufgenommenen Vortriebsmotors eingreift. Auch hier ist es möglich, die Übertragungsmittel von der Zahnschiene zu trennen, etwa um einen Fahrwagen ein- oder auszufädeln. Insbesondere ist es aber auch möglich, diese Lösung mit einer Schleppkette zu kombinieren, so dass nach einem Ausklinken des Schlittens aus einer Schleppkette ein Eingreifen der Übertragungsmittel in eine Zahnschiene erfolgt, so dass selbst im laufenden Prozess ein Systemwechsel vollzogen werden kann.

Der Fahrwagen weist neben einem Rad- oder Rollenelement zur Abstützung auf einer Stützschiene auch einen parallel zum Schienenkistenabschnitt angeordneten und parallel zu diesem beweglichen Stützschienenabschnitt auf. Schienenkistenabschnitt und Stützschienenabschnitt können über einen Verbindungsarm miteinander verbunden sein, so dass eine gegenseitige Fixierung stattfindet. Der Stützschienenabschnitt kann in besonders vorteilhafter Ausgestaltung seinerseits ebenfalls auf einer zweiten, konzentrisch bogenförmigen Karussellschiene verfahrbar sein.

Ein entsprechendes System kann auch zum Einfädeln und Ausfädeln von Fahrwagen in das Fördersystem oder aus diesem heraus eingesetzt werden. In diesem Fall kann etwa ein Schienenkistenabschnitt seitlich verschieblich angeordnet sein, welcher in eine Beladungsposition verschoben werden kann. Dort kann ein beladener Fahrwagen gegen einen unbeladenen Fahrwagen getauscht oder ein unbeladener Fahrwagen beladen werden. Hierbei kann ein paralleler Schienenkistenabschnitt für die Beladungszeit die durch das seitliche Verschieben des Schienenkistenabschnitts eingefügt werden, so dass der Förderweg unterdessen nicht unterbrochen wird.

Soweit ferner eine Stützschiene im Fördersystem vorhanden ist, kann auch hier entsprechend mit einem parallelen Stützschienenabschnitt verfahren werden.

Bei der Verwendung aller Schienenkistenabschnitte, in welche die Fahrwagen eingefördert werden, ist es schließlich auch sinnvoll, Mittel zum Ein- und/oder Ausfördern eines Fahrwagens vorzusehen, so dass die Fahrwagen die Schienenkistenabschnitte befahren und auch wieder verlassen können. Dies kann etwa durch ein zusätzliches Förderelement in dem Schienenkistenabschnitt erfolgen, oder aber durch die bereits weiter oben beschriebenen Mittel, welche auch auf die Schienenkistenabschnitte angewendet werden können.

Die vorstehend beschriebene Erfindung wird im Folgenden anhand eines Ausführungsbeispiels näher erläutert.

Es zeigen
- Figur 1a-d: einen Fahrwagen umfassend einen Schlitten und einen Auslieger zur Verwendung in einem Fördersystem in perspektivischer Darstellung in vier Varianten mit unterschiedlichen Antrieben für Kippfunktion und Vortrieb,
- Figur 2: ein Detail eines in eine Schienenkiste eingesetzten Fahrwagens gemäß Figur 1 mit einem ortsfesten zweiten Zahnelement in perspektivischer Darstellung,
- Figur 3: ein Detail eines in eine Schienenkiste eingesetzten Fahrwagens gemäß Figur 1 mit einem mitgeführten Kippmotor in perspektivischer Darstellung,
- Figur 4: eine Schienenkiste zur Aufnahme eines Schlittens gemäß Figur 1 unter Verwendung eines Vortriebs mit einer Schleppkette, in perspektivischer Darstellung, sowie
- Figur 5: eine Schienenkiste gemäß Figur 4 mit einem Schlitten gemäß Figur 1 unter theoretischer gleichzeitiger Verwendung eines Vortriebs mit einer Schleppkette und eines Vortriebsmotors, in seitlicher Teilschnitt-Draufsicht.

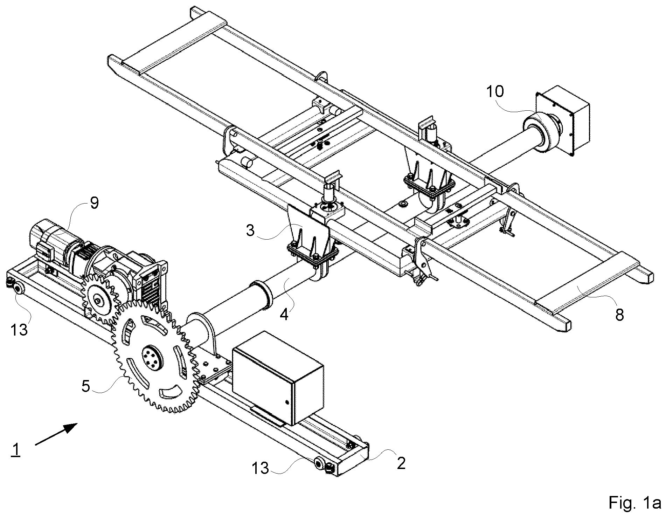

Figur 1a zeigt einen Fahrwagen 1 zur Verwendung in einem modularen Fördersystem. Ein solches modulares Fördersystem dient insbesondere dazu, eine Fahrzeugkarosserie, allgemeiner ein Werkstück, nacheinander verschiedenen Behandlungsschritten zuzuführen. Hierzu kann etwa ein Vorbehandlungs- und Behandlungsweg bei der Karosserielackierung in der Automobilindustrie vorgesehen sein. Dabei handelt es sich etwa um eine Waschstraße, ein Tauchbecken oder eine Kabine mit Spezialflüssigkeit.

Die traditionelle Hängefördertechnik hat in der Regel lange Prozesstanks, in denen die Werkstücke eingetaucht werden. Prinzipiell bestehen hinsichtlich der einzelnen Schritte zahlreiche Erwägungen, die auch bei der verwendeten Fördertechnik berücksichtigt werden müssen, so sind Lufteinschlüsse innerhalb der Dach- und Hohlraumstruktur einer Karosserie nicht leicht zu evakuieren, weshalb die Phosphatier- und E-Beschichtungsfilmbildungseffekte als wesentlich anzusehen sind. Gleichzeitig gibt es auch Probleme wie Flüssigkeitseinschlüsse, unzureichende Entwässerung, Flüssigkeitstransport zwischen benachbarten Tanks und ein großer Chemikalien- und Spülwasserverbrauch. Dies alles führt zu einem starken Anstieg der Beschichtungskosten bei den Fahrzeugkarosserien. Der Druck, wirtschaftliche Lösungen zu suchen, auch im Bereich der Fördertechnik, ist also groß. Der Fahrwagen 1 ist vor diesem Hintergrund seinerseits modular aufgebaut, um als Basis für unterschiedlichste Antriebskonzepte, auch im Fall von wechselnden Konzepten innerhalb eines Fahrweges, einsetzbar zu sein.

Im Wesentlichen besteht der Fahrwagen 1 aus einem Schlitten 2 und einem Auslieger 3, welcher ein Tragelement 8 zur Aufnahme einer Fahrzeugkarosserie aufweist. Um die hier nicht gezeigte Fahrzeugkarosserie über einem Tauchbad in dieses einzukippen, ist der Auslieger 3 um eine Ausliegerachse 4 herum drehbar gelagert. Der Auslieger 3 weist zudem an seinem von dem Schlitten 2 fortweisenden Ende ein Rad- oder Rollenelement 10 auf, welches auf einer Stützschiene abgestützt wird. Weiter weist der Schlitten 2 an seiner Außenwandung Rad- und Führungsrollen 13 auf, welche zum Aufliegen und seitlichen Abstützen an der Innenseite einer Schienenkiste dienen. Eine Drehung des Ausliegers 3 um die Ausliegerachse 4 herum erfolgt über ein endständiges erstes Zahnelement 5, das als vollständiges Zahnrad mit einer 360°-Kontur ausgeführt ist. Dieses ist drehfest auf dem Ende der Ausliegerachse 4 aufgenommen und überträgt eine Drehkraft auf die Ausliegerachse 4. Um unterschiedliche Quellen für eine solche Drehkraft ausnutzen zu können, ist das erste Zahnelement 5 folgendermaßen gebildet.

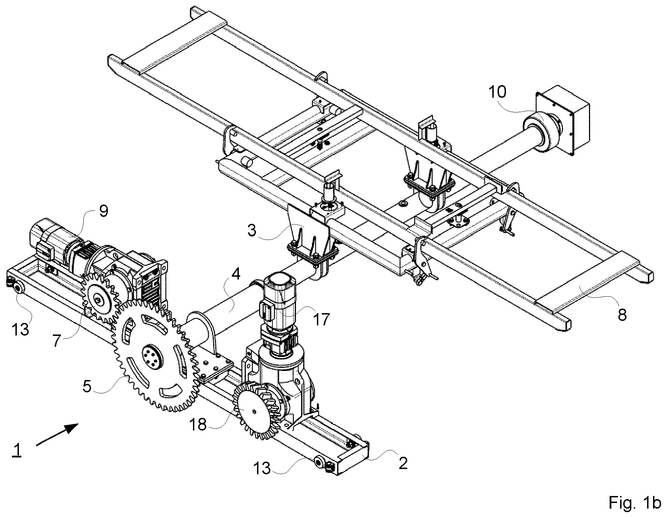

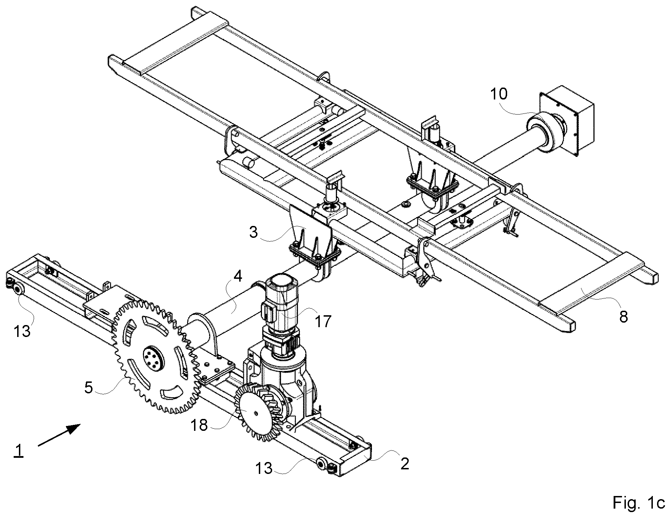

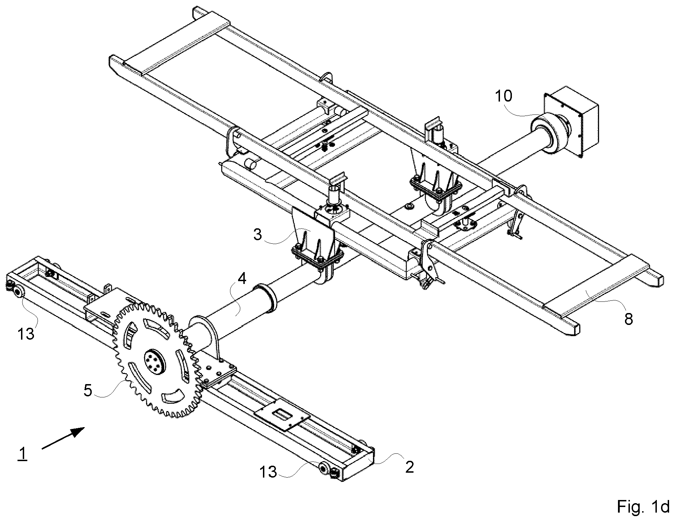

Zunächst befindet sich das erste Zahnelement 5 neben einer Montageposition, an der auf dem Schlitten 2 ein Kippmotor 9 angeordnet werden kann. Dieser ist optional, aber in Figur 1 beispielhaft montiert. Der Kippmotor 9 treibt ein drittes Zahnelement 7 an, welches auf der Antriebsachse des Kippmotors montiert ist, bedarfsweise unter Zwischenschaltung eines Differenzialgetriebes oder eines Koppelgetriebes, wobei das dritte Zahnelement 7 mit dem ersten Zahnelement 5 kämmt. Treibt der Kippmotor 9 also das dritte Zahnelement 7 an, so betätigt dieses das erste Zahnelement 5 und dieses wiederum die Ausliegerachse 4, auf welcher das erste Zahnelement 5 drehfest aufgenommen ist. Hierdurch kann das Tragelement 8 auf dem Auslieger 3 mit einer darauf befestigten Karosserie über einem Tauchbecken gedreht und in dieses hineingetaucht werden. Entsprechend kann dieser Bewegungsablauf anschließend auch wieder rückwärts ablaufen oder aber eine vollständige Bewegung um 360° durchgeführt werden, bis die Karosserie wieder in die ursprüngliche Lage zurückgekehrt ist.

Allerdings sieht die Konstruktion des Fahrwagens 1 auch weitere Ausgestaltungen, sowohl hinsichtlich der Kippfunktion als auch des Vortriebs vor. Während Figur 1a eine Betätigung des Ausliegers 3 über einen Kippmotor 9 wiedergibt, und der Vortrieb über eine Schleppkette erfolgt, sieht die Figur 1b vor, den Vortrieb über einen Vortriebsmotor 17 zu leisten, welcher Übertragungsmittel 18 aufweist, die in eine an einer Schienenkiste 11 montierte, durchgehende Zahnschiene 16 eingreift. Mithilfe der Übertragungsmittel zieht der Vortriebsmotor 17 den Schlitten 2 in der Schienenkiste 11 vorwärts und ist damit im Unterschied zu einer Schleppkettenlösung wie in Figur 1a autark beweglich.

Eine weitere Variante stellt es dar, das erste Zahnelement 5 über an der Schienenkiste 11 montierte zweite Zahnelemente 6 in Form von Zahnschienen in eine Kippposition zu versetzen. Eine Drehung des Ausliegerarms 4 erfolgt dann bei jedem Überstreichen eines solchen zweiten Zahnelements 6. Dies ist in Figur 1c dargestellt, wobei diese Form des Kippantriebs in Figur 1c mit einem Vortriebsmotor 17 kombiniert ist. Ein autarker Vortrieb spielt hier also mit einer ortsabhängig ausgelösten Kippfunktion zusammen.

Schließlich verzichtet die Variante der Figur 1d vollständig auf mitgeführte Antriebe. Die Kippfunktion wird vielmehr durch die als Zahnschienen ausgeführten zweiten Zahnelemente 6 realisiert, während der Vortrieb hier wiederum über die Schleppkette 26 verwirklicht wird.

Somit handelt es sich bei dem beschriebenen Schlitten um einen frei konfigurierbaren Schlitten hinsichtlich zweier alternativer Vortriebs- und Kippmöglichkeiten.

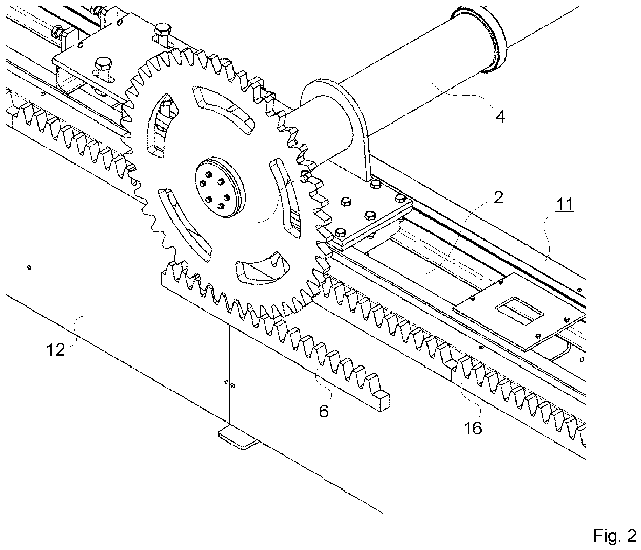

Die letztgenannte Variante ist in Figur 2 im Zusammenhang mit einer Schienenkiste 11 gezeigt und sieht das genannte, zweite Zahnelement 6 in Form einer geraden Zahnschiene vor, in welche das erste Zahnelement 5 eingreifen kann. Das erste Zahnelement 5 ist aus diesem Grund nicht oberhalb des Schlittens 2 positioniert, sondern an einer Position der Ausliegerachse 4 außerhalb des Schlittens 2, also neben diesem. Dabei sind Durchmesser und Position so gewählt, dass die Kontur des ersten Zahnelements 5 an dem Schlitten vorbei verläuft und diesen noch untergreift. Hierbei hält das erste Zahnelement 5 einen Abstand von dem Schlitten 2 ein, der eine Zwischenlage der Außenwand 12 einer Schienenkiste 11 erlaubt. An der Außenwand 12 der Schienenkiste 11 ist ein Zahnschienenabschnitt als zweites Zahnelement 6 montiert, in den der sich nähernde Schlitten 2 mit dem ersten Zahnelement 5 eingreift. Sobald das erste Zahnelement 5 in die Zähne des zweiten Zahnelements 6 eingreift, beginnt die Ausliegerachse 4 aufgrund der auf den Schlitten 2 wirkenden Vortriebskraft sich zu drehen und erzeugt so eine positionsabhängige Rotation der mitgeführten Karosserie. Insbesondere wenn das zweite Zahnelement 6 keine Kippdrehung von einer stabilen Lage in eine andere oder bis zurück in die gleiche stabile Lage bewirkt, kann dem Auslieger 3 zusätzlich eine Bremse zugeordnet sein, welche die einmal eingenommene Kippposition hält, wenn das erste Zahnelement 5 außer Eingriff des zweiten Zahnelements 6 gerät.

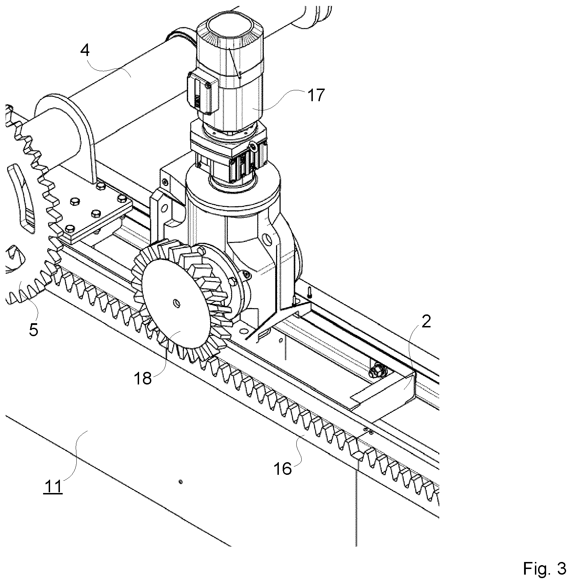

Das bereits angesprochene Vortriebskonzept mit einer durchgehenden Zahnschiene 16 an der Schienenkiste 11 ist in Figur 3 gezeigt. Mithilfe eines mitgeführten Vortriebsmotors 17 wird der Schlitten 2 und mit diesem der ganze Fahrwagen bewegt.

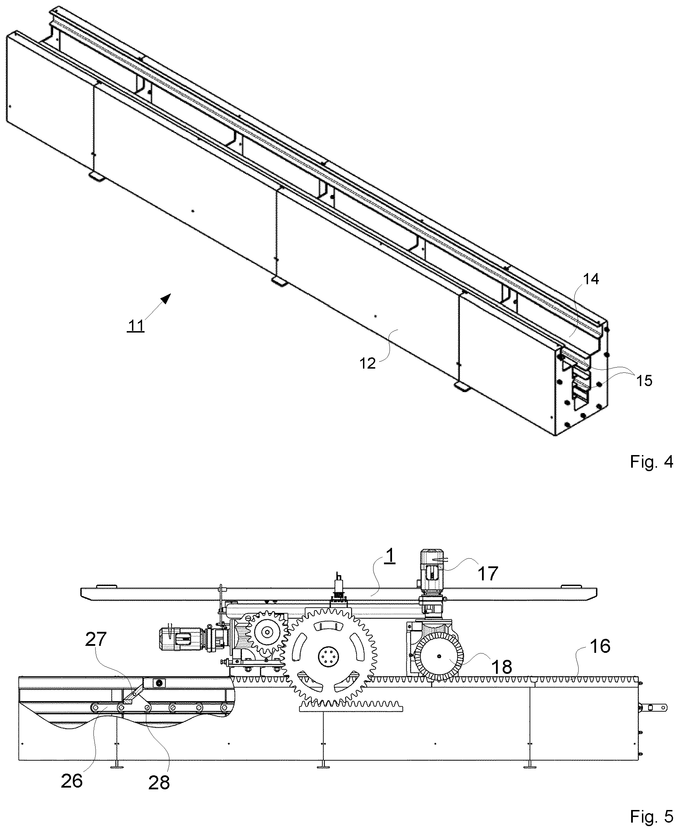

Allerdings sieht die Erfindung auch ein alternatives Vortriebskonzept mit einer Schleppkette vor. Hierzu kann eine Schienenkiste 11, wie in Figur 4 gezeigt, eingesetzt werden. Die Schienenkiste 11 weist an ihrer bestimmungsgemäß nach oben weisenden Seite einen Aufnahmeraum 14 auf, in welchem der Schlitten 2 verfahren werden kann. Die Rad- und Führungsrollen 13 des Schlittens 2 stützen sich an der Innenkontur des Aufnahmeraums 14 seitlich und nach unten ab. In der Schienenkiste 11 kann jedoch auch innerhalb zweier Kettenführungsräume 15 eine endlose Schleppkette geführt sein, welche in einem oberen Kettenführungsraum 15 in die eine Richtung, in dem unteren in die Gegenrichtung geführt wird.

Beide Vortriebsvarianten sind nochmals in der Figur 5 gleichzeitig dargestellt. In der Schienenkiste 11 ist in diesem Zusammenhang eine Schleppkette 26 vorgesehen, welche aus einzelnen, auf Rad- und Führungsrollen in dem Kettenführungsraum 15 aufgenommenen Kettengliedern besteht. In regelmäßigen Abständen können an dem Schlitten 1 angeordnete Rastelemente 27 in die Kettenglieder einrasten, so dass ein eingerasteter Schlitten 1 durch die fortwährend gezogene Schleppkette 26 befördert wird. Der alternative Vortrieb wird durch einen Vortriebsmotor 17 geleistet, der mit Übertragungsmitteln 18 wirkverbunden ist, die wiederum in eine an der Schienenkiste 11 angebrachte Zahnschiene 16 kraftschlüssig eingreift und dadurch einen Vortrieb bewirkt.

Die Erfindung bietet also sowohl einen zentralen wie einen dezentralen Vortrieb und gleichzeitig einen zentralen und einen dezentrale Kippfunktion an, die nach Bedarf kombiniert werden können. Auch können etwa beide Vortriebskonzepte miteinander kombiniert werden, um mithilfe des dezentralen Vortriebsmotors 17 ein Einfädeln oder Ausfädeln in die Schleppkette zu erleichtern.

Vorstehend beschrieben ist somit ein modulares Fördersystem, welches flexibel, sowie leicht erweiterbar und effizient herstellbar ist, da es sowohl im Hinblick auf den Kippantrieb als auch im Hinblick auf den Vortrieb als Taktanlage oder auch als kontinuierlich fördernde Anlage angepasst werden kann.

### BEZUGSZEICHENLISTE

- 1: Fahrwagen
- 2: Schlitten
- 3: Auslieger
- 4: Ausliegerachse
- 5: erstes Zahnelement
- 6: zweites Zahnelement
- 7: drittes Zahnelement
- 8: Tragelement
- 9: Kippmotor
- 10: Rad- oder Rollenelement
- 11: Schienenkiste
- 12: Außenwand
- 13: Rad- und Führungsrollen
- 14: Aufnahmeraum
- 15: Kettenführungsraum
- 16: Zahnschiene
- 17: Vortriebsmotor
- 18: Übertragungsmittel
- 26: Schleppkette
- 27: Rastelement
- 28: Rad- und Führungsrollen

## Patentansprüche

1. Modulares Fördersystem mit einer Mehrzahl schienengeführter Fahrwagen (1), welche jeweils einen Schlitten (2) zur Führung durch eine Schienenkiste (11) des Fördersystems, sowie einen horizontalen Auslieger (3) zum Tragen einer Last, insbesondere einer Fahrzeugkarosserie, aufweisen, wobei der Auslieger (3) um eine horizontale Ausliegerachse (4) drehbar gelagert ist und zur Übertragung einer Drehbewegung auf die Ausliegerachse (4) ein mit dieser drehfest verbundenes erstes Zahnelement (5) aufweist, welches entweder mit entlang einem Fahrweg des Schlittens (2) ortsfest montierten zweiten Zahnelementen (6), oder alternativ mit einem dritten Zahnelement (7) kämmt, welches von einem auf dem Schlitten (2) benachbart zu der Ausliegerachse (4) montierten, mitgeführten Kippmotor (9) betätigt wird, wobei das erste Zahnelement (5) hierfür sowohl derart außerhalb des Schlittens (2) positioniert ist, dass es mit den zweiten Zahnelementen (6) entlang des Fahrwegs des Schlittens (2) in Eingriff geraten, als auch derart benachbart zu einer Montageposition des Kippmotors (9) auf dem Schlitten (2) positioniert ist, dass es mit dem dritten Zahnelement (7) zusammenwirken kann,
**dadurch gekennzeichnet, dass** einem von dem Schlitten (2) abgewandten Ende des Ausliegers (3) ein Rad- oder Rollenelement (10) zur Abstützung auf einer parallel zu der Schienenkiste (11) verlaufenden Stützschiene zugeordnet ist und dem Fahrweg des Schlittens (2) wenigstens ein seitlich verschieblicher Schienenkistenabschnitt zum Einfädeln von Fahrwagen zugeordnet ist, wobei dem seitlich verschieblichen Schienenkistenabschnitt ein paralleler, parallelverschieblicher Stützschienenabschnitt zugeordnet ist.

2. Fördersystem gemäß einem der vorhergehenden Ansprüche, **dadurch gekennzeichnet, dass** dem Schienenkistenabschnitt (20) Mittel zum Ein- und/oder Ausfördern eines Fahrwagens (1) zugeordnet sind.

3. Fördersystem gemäß einem der vorhergehenden Ansprüche, **dadurch gekennzeichnet, dass** das erste Zahnelement (5) als umlaufendes Zahnrad ausgeführt ist, welches eine Außenwand (12) der Schienenkiste (11) überstreicht, wobei die zweiten Zahnelemente (6) mit der Außenwand (12) verbindbar sind.

4. Fördersystem gemäß einem der vorhergehenden Ansprüche, **dadurch gekennzeichnet, dass** dem Auslieger eine Bremseinrichtung zugeordnet ist, welche die Ausliegerachse (4) in vorbestimmten Drehpositionen hält.

5. Fördersystem gemäß einem der vorhergehenden Ansprüche, **dadurch gekennzeichnet, dass** dem Schlitten (2) der Ausliegerachse (4) benachbart ein Kippmotor (9) zugeordnet ist, welcher ein Differenzialgetriebe zum Anfahren und Halten vorgewählter Drehpositionen der Ausliegerachse (4) aufweist.

6. Fördersystem gemäß einem der vorhergehenden Ansprüche, **dadurch gekennzeichnet, dass** dem Schlitten Rad- und Führungsrollen (13) zur Abstützung an der Schienenkiste (11) zugeordnet sind.

7. Fördersystem gemäß einem der vorhergehenden Ansprüche, **dadurch gekennzeichnet, dass** die Schienenkiste (11) einen Aufnahmeraum (14) zur Aufnahme des Schlittens (2) aufweist.

8. Fördersystem gemäß einem der vorhergehenden Ansprüche, **dadurch gekennzeichnet, dass** der Schienenkiste (11) ein Kettenführungsraum (15) zur Aufnahme einer endlosen Schleppkette (26) zugeordnet ist, wobei die Schlitten (2) der Fahrwagen (1) Rastelemente (27) zum vorzugsweise lösbaren Einrasten in die Schleppkette (26) aufweisen.

9. Fördersystem gemäß Anspruch 8, **dadurch gekennzeichnet, dass** der Fahrweg der Schlitten (2) in gerade Fahrabschnitte unterteilt ist, welchen jeweils eine Schleppkette (26) zugeordnet ist, wobei jede Schleppkette (26) eine endständige Kettenspanneinrichtung aufweist.

10. Fördersystem gemäß einem der Ansprüche 8 oder 9, **dadurch gekennzeichnet, dass** die Schleppkette (26) neben Zugelementen zur Verbindung mit den Schlitten (2) auch Rad- und Führungsrollen (28) aufweist, welche in dem Kettenführungsraum (15) der Schienenkiste (11) längsbeweglich geführt sind.

11. Fördersystem gemäß einem der vorhergehenden Ansprüche, **dadurch gekennzeichnet, dass** der Schienenkiste (11) eine durchgehende Zahnschiene (16) zugeordnet ist, wobei die Schlitten (2) der Fahrwagen (1) Vortriebsmotoren (17) aufweisen, welche vermittels Übertragungsmitteln (18) mit der durchgehenden Zahnschiene (16) wirkverbunden oder wirkverbindbar sind.

## Claims

1. Modular conveyor system, comprising a plurality of rail-guided carriages (1), each of which has a slide (2) for being guided through a rail box (11) of the conveyor system, and comprising a horizontal support (3) for carrying a load, in particular a vehicle body, the support (3) being mounted so as to be rotatable about a horizontal support shaft (4) and having a first toothed element (5) connected to the support shaft (4) for conjoint rotation in order to transmit a rotational movement to said support shaft, which toothed element either engages with second toothed elements (6) that are fixedly mounted along a travel path of the slide (2), or alternatively engages with a third toothed element (7) which is actuated by an entrained tilt motor (9) that is mounted on the slide (2) adjacently to the support shaft (4), the first toothed element (5) being, for this purpose, both positioned outside the slide (2) in such a way that it engages with the second toothed elements (6) along the travel path of the slide (2) and positioned adjacently to a mounting position of the tilt motor (9) on the slide (2) in such a way that it can interact with the third toothed element (7),
**characterized in that** a wheel element or roller element (10) for support on a carrier rail that extends parallel to the rail box (11) is associated with an end of the support (3) that faces away from the slide (2) and at least one laterally displaceable rail box portion for the insertion of carriages is associated with the travel path of the slide (2), a parallel carrier rail portion which can be displaced in parallel being associated with the laterally displaceable rail box portion.

2. Conveyor system according to either of the preceding claims, **characterized in that** means for onloading and/or offloading a carriage (1) are associated with the rail box portion (20).

3. Conveyor system according to any of the preceding claims, **characterized in that** the first toothed element (5) is designed as a moving toothed wheel which sweeps over an outer wall (12) of the rail box (11), the second toothed elements (6) being connectable to the outer wall (12).

4. Conveyor system according to any of the preceding claims, **characterized in that** a braking device is associated with the support, which device holds the support shaft (4) in predetermined rotational positions.

5. Conveyor system according to any of the preceding claims, **characterized in that** a tilt motor (9) adjacent to the support shaft (4) is associated with the slide (2), which motor has a differential transmission for approaching and holding preselected rotational positions of the support shaft (4).

6. Conveyor system according to any of the preceding claims, **characterized in that** wheel rollers and guide rollers (13) for supporting on the rail box (11) are associated with the slide.

7. Conveyor system according to any of the preceding claims, **characterized in that** the rail box (11) has a receiving space (14) for receiving the slide (2).

8. Conveyor system according to any of the preceding claims, **characterized in that** a chain guide space (15) for receiving an endless drag chain (26) is associated with the rail box (11), the slides (2) of the carriage (1) having latching elements (27) for preferably releasable latching into the drag chain (26).

9. Conveyor system according to claim 8, **characterized in that** the travel path of the slides (2) is divided into straight travel portions, a drag chain (26) being associated with each of said portions, each drag chain (26) having a chain tensioning device at the end.

10. Conveyor system according to either claim 8 or claim 9, **characterized in that** the drag chain (26) has wheel rollers and guide rollers (28) in addition to tension elements for connection to the slides (2), which rollers are longitudinally guided in the chain guide space (15) of the rail box (11).

11. Conveyor system according to any of the preceding claims, **characterized in that** a continuous toothed rail (16) is associated with the rail box (11), the slides (2) of the carriages (1) having propulsion motors (17) which are or can be operatively connected to the continuous toothed rail (16) via transmission means (18).

## Revendications

1. Système de transport modulaire comportant une pluralité de chariots (1) guidés par des rails, lesquels présentent respectivement un coulisseau (2) permettant le guidage à travers un caisson de rails (11) du système de transport, ainsi qu'une console (3) horizontale permettant de porter une charge, en particulier une carrosserie de véhicule, la console (3) étant montée rotative autour d'un axe de console (4) horizontal et présentant un premier élément denté (5) solidaire en rotation audit axe de console et permettant la transmission d'un mouvement de rotation à l'axe de console (4), lequel premier élément denté s'engrenant soit avec des deuxièmes éléments dentés (6) montés fixes le long d'une trajectoire de déplacement du coulisseau (2), soit alternativement avec un troisième élément denté (7) qui est actionné par un moteur d'inclinaison (9) entraîné et monté adjacent à l'axe de console (4) sur le coulisseau (2), le premier élément denté (5) étant à cet effet positionné à l'extérieur du coulisseau (2) de manière à venir en prise avec les deuxièmes éléments dentés (6) le long de la trajectoire de déplacement du coulisseau (2), et étant également positionné adjacent à une position de montage du moteur d'inclinaison (9) sur le coulisseau (2) de manière à pouvoir coopérer avec le troisième élément denté (7),
**caractérisé en ce qu'**un élément de roue ou de rouleau (10) est associé à une extrémité de la console (3) opposée au coulisseau (2) pour l'appui sur un rail de support s'étendant parallèlement au caisson de rails (11) et au moins une section de caisson de rails pouvant être déplacée latéralement est associée à la trajectoire de déplacement du coulisseau (2) pour l'enfilage de chariots, une section de rails de support parallèle et pouvant être déplacée parallèlement étant associée à la section de caisson de rails pouvant être déplacée latéralement.

2. Système de transport selon l'une des revendications précédentes, **caractérisé en ce que** des moyens permettant de charger et/ou de décharger un chariot (1) sont associés à la section de caisson de rails (20).

3. Système de transport selon l'une des revendications précédentes, **caractérisé en ce que** le premier élément denté (5) est réalisé sous la forme d'une roue dentée circonférentielle qui balaie une paroi externe (12) du caisson de rails (11), les deuxièmes éléments dentés (6) pouvant être reliés à la paroi externe (12).

4. Système de transport selon l'une des revendications précédentes, **caractérisé en ce qu'**un dispositif de freinage maintenant l'axe de console (4) dans des positions de rotation prédéfinies est associé à la console.

5. Système de transport selon l'une des revendications précédentes, **caractérisé en ce qu'**un moteur d'inclinaison (9) présentant un engrenage différentiel permettant de démarrer et de maintenir des positions de rotation présélectionnées de l'axe de console (4) est associé adjacent au coulisseau (2) de l'axe de console (4).

6. Système de transport selon l'une des revendications précédentes, **caractérisé en ce que** des rouleaux de roue et de guidage (13) permettant l'appui sur le caisson de rails (11) sont associés au coulisseau.

7. Système de transport selon l'une des revendications précédentes, **caractérisé en ce que** le caisson de rails (11) présente un espace de réception (14) permettant la réception du coulisseau (2).

8. Système de transport selon l'une des revendications précédentes, **caractérisé en ce qu'**un espace de guidage de chaîne (15) permettant la réception d'une chaîne d'entraînement (26) sans fin est associé au caisson de rails (11), les coulisseaux (2) des chariots (1) présentant des éléments d'encliquetage (27) permettant de préférence un encliquetage amovible dans la chaîne d'entraînement (26).

9. Système de transport selon la revendication 8, **caractérisé en ce que** la trajectoire de déplacement des coulisseaux (2) est divisée en sections de déplacement rectilignes auxquelles est respectivement associée une chaîne d'entraînement (26), chaque chaîne d'entraînement (26) présentant un dispositif tendeur de chaîne au niveau de son extrémité.

10. Système de transport selon l'une des revendications 8 ou 9, **caractérisé en ce que** la chaîne d'entraînement (26) présente également, en plus d'éléments de traction pour la liaison aux coulisseaux (2), des rouleaux de roue et de guidage (28) qui sont guidés de manière à être mobiles longitudinalement dans l'espace de guidage de chaîne (15) du caisson de rails (11).

11. Système de transport selon l'une des revendications précédentes, **caractérisé en ce qu'**un rail denté continu (16) est associé au caisson de rails (11), les coulisseaux (2) des chariots (1) présentant des moteurs de propulsion (17) qui sont reliés ou peuvent être reliés de manière fonctionnelle au rail denté continu (16) à l'aide de moyens de transmission (18).
